# FASCICULE DE BREVET EUROPEEN

(11) **EP 0 839 999 B1**
(45) Date de publication et mention de la délivrance du brevet: **25.09.2002**
(21) Numéro de dépôt: 97402549.6
(22) Date de dépôt: 28.10.1997
(51) Int. Cl.: F02K 7/18

(54) **Système d'obturation pour un orifice d'entrée d'air dans la chambre de combustion d'un statoréacteur**
Einrichtung zur Beseitigung des Verschlusses der in die Brennkammer von Staustrahltriebwerken einmündenden Lufteinlaufkanäle
Device for removing the plug from the air intake ducts opening into the combustion chamber of a ram jet engine

(30) Priorité: 30.10.1996 FR 9613237
(43) Date de publication de la demande: 06.05.1998
(73) Titulaire: AEROSPATIALE MATRA, 75016 Paris (FR)
(72) Inventeur: Hallais, Michel, 18340 Lapan (FR); Protat, Vincent, 18000 Bourges (FR)
(74) Mandataire: Bonnetat, Christian

(56) Documents cités:
- DE-A- 3 242 585
- FR-A- 2 157 668
- FR-A- 2 402 773
- FR-A- 2 627 808
- FR-A- 2 661 454
- GB-A- 2 068 090
- GB-A- 2 104 628
- US-A- 3 115 008
- US-A- 4 028 886
- PATENT ABSTRACTS OF JAPAN vol. 015, no. 212 (M-1118), 30 mai 1991 & JP 03 057867 A (TECH RES & DEV INST OF JAPAN DEF AGENCY;OTHERS: 01), 13 mars 1991,
- PATENT ABSTRACTS OF JAPAN vol. 017, no. 041 (M-1359), 26 janvier 1993 & JP 04 259647 A (TECH RES & DEV INST OF JAPAN DEF AGENCY;OTHERS: 01), 16 septembre 1992,
- PATENT ABSTRACTS OF JAPAN vol. 016, no. 434 (M-1308), 10 septembre 1992 & JP 04 148047 A (NISSAN MOTOR CO LTD), 21 mai 1992,
- PATENT ABSTRACTS OF JAPAN vol. 016, no. 434 (M-1308), 10 septembre 1992 & JP 04 148051 A (NISSAN MOTOR CO LTD), 21 mai 1992,
- PATENT ABSTRACTS OF JAPAN vol. 016, no. 434 (M-1308), 10 septembre 1992 & JP 04 148048 A (NISSAN MOTOR CO LTD), 21 mai 1992,

## Description

La présente invention concerne les statoréacteurs, ainsi que les mobiles aériens, tels que missiles ou analogues, propulsés par un tel statoréacteur. Elle se rapporte plus particulièrement à un système d'obturation pour un orifice d'entrée d'air dans la chambre de combustion d'un statoréacteur.

On sait que les statoréacteurs sont essentiellement constitués par une chambre de combustion, se terminant par une tuyère d'éjection et à l'intérieur de laquelle sont introduits du combustible liquide ou gazeux (pouvant être engendré à partir d'un combustible solide) et de l'air de combustion. Cet air de combustion est introduit dans ladite chambre de combustion à travers au moins un orifice de la paroi de ladite chambre de combustion et captant de l'air (ou recevant celui-ci par l'intermédiaire d'une manche de prise d'air) lorsque ledit statoréacteur (ou le mobile aérien qui le porte) se déplace par rapport à l'air ambiant.

Ainsi, le fonctionnement d'un statoréacteur nécessite la mise en vitesse préalable dudit statoréacteur par rapport audit air ambiant.

Pour ce faire, il est usuel, dans une phase initiale de fonctionnement correspondant à la mise en vitesse dudit statoréacteur, de faire fonctionner celui-ci en fusée, grâce à un propulseur auxiliaire consommable disposé dans ladite chambre de combustion, puis, lorsque ledit statoréacteur a atteint une vitesse prédéterminée et que ledit propulseur auxiliaire est complètement consumé, on passe en fonctionnement statoréacteur proprement dit, avec injection de combustible et d'air de combustion dans la chambre de combustion.

Un tel fonctionnement bimode (mode fusée, puis mode statoréacteur) oblige à prévoir un système d'obturation pour, d'une part, obturer ledit orifice d'introduction d'air pendant le fonctionnement en fusée, afin d'éviter les fuites, à travers ledit orifice, des gaz engendrés par ledit propulseur auxiliaire consommable et, d'autre part, ouvrir ledit orifice d'introduction d'air pour le fonctionnement en statoréacteur proprement dit.

Les systèmes d'obturation connus sont de quatre types :
- le premier type comporte au moins un obturateur éjectable, dont l'éjection naturelle s'effectue sous l'action de la différence des pressions respectivement appliquées aux deux faces dudit obturateur, c'est-à-dire, d'un côté, la pression de l'air capté et, de l'autre, la pression des gaz dudit propulseur auxiliaire à l'intérieur de ladite chambre de combustion. On remarquera que l'éjection d'un tel obturateur s'effectue par la chambre de combustion, de sorte qu'il peut en résulter des détériorations de la couche de protection thermique généralement prévue sur les parois de ladite chambre et/ou de la tuyère d'éjection des gaz. De plus, une telle éjection naturelle suppose une différence de pression suffisante, de sorte que les systèmes d'obturation de ce premier type sont limités à des statoréacteurs destinés à fonctionner à basse ou à moyenne altitude ;
- le deuxième type comporte au moins une trappe basculante à ouverture commandée. On évite ainsi les inconvénients des systèmes du premier type, mais on doit prévoir un système de commande particulièrement sophistiqué, évitant toute ouverture intempestive de la trappe, qui pourrait entraîner une mise à feu prématurée dudit propulseur auxiliaire consommable et, par suite, endommager le porteur (avion par exemple) d'un missile équipé dudit statoréacteur ;
- le troisième type utilise, comme obturateur, la paroi de ladite chambre de combustion elle-même, qui est découpée à la forme dudit orifice à la fin du fonctionnement en fusée. Il va de soi que le dispositif de découpe utilisé à cet effet (généralement de type pyrotechnique) doit présenter la même sécurité que celle imposée au système de commande de la trappe basculante d'un système du deuxième type et qu'un tel système du troisième type présente l'inconvénient d'un système du premier type, en ce qui concerne l'éjection, à travers la chambre de combustion, des parties de paroi découpées ; et
- le quatrième type, par exemple décrit dans le document JP04-148051, utilise un obturateur en une matière à mémoire de forme qui se déforme sous l'action de la chaleur régnant dans ladite chambre de combustion.

La présente invention a pour objet de remédier aux inconvénients rappelés ci-dessus et elle concerne un système d'obturation non destructif d'orifice d'entrée d'air de statoréacteur permettant à celui-ci :
- de fonctionner à haute altitude, sans limitation ;
- d'ouvrir ledit orifice naturellement à la fin du fonctionnement du propulseur auxiliaire consommable, sans recours à un système de commande extérieur ; et
- de ne comporter aucun élément éjectable à travers ladite chambre de combustion.

A cette fin, selon l'invention, le système d'obturation pour un orifice d'introduction d'air de combustion dans la chambre de combustion d'un statoréacteur, ledit statoréacteur étant susceptible, dans une phase initiale de fonctionnement correspondant à la mise en vitesse dudit statoréacteur, de fonctionner en fusée grâce à un propulseur auxiliaire consommable disposé dans ladite chambre de combustion, puis, lorsque ledit statoréacteur atteint une vitesse prédéterminée, de fonctionner en statoréacteur proprement dit avec injection de combustible et d'air de combustion dans ladite chambre de combustion, et ledit système d'obturation comportant une trappe montée mobile par rapport à ladite chambre de combustion pour pouvoir prendre soit une position d'obturation pour laquelle ladite trappe obture ledit orifice pendant ladite phase initiale de fonctionnement en fusée, soit une position d'ouverture pour laquelle ladite trappe ouvre ledit orifice pour le fonctionnement en statoréacteur, est remarquable en ce qu'il comporte :
- un système élastique, reliant ladite chambre de combustion et ladite trappe et prenant soit un état bandé, qui correspond à ladite position d'obturation de ladite trappe et dans lequel il tend à ouvrir cette dernière, soit un état débandé pour lequel ladite trappe est dans ladite position d'ouverture ; et
- un élément de retenue pour maintenir ledit système élastique dans ledit état bandé pendant ladite phase initiale de fonctionnement en fusée, ledit élément de retenue étant sensible aux gaz chauds émis par ledit propulseur auxiliaire consommable, de sorte que, à la fin de la combustion de celui-ci, ledit élément de retenue libère ledit système élastique qui passe spontanément de son état bandé à son état débandé entraînant ladite trappe de sa position d'obturation à sa position d'ouverture.

Ainsi, ladite trappe peut passer de sa position d'obturation à sa position d'ouverture sous l'action spontanée dudit système élastique, sans besoin d'un système de commande auxiliaire. On remarquera que l'action dudit système élastique est de même sens que celle de la différence des pressions appliquées sur les deux faces de la trappe. Aussi, si le statoréacteur est monté sur un missile volant à basse ou à moyenne altitude, la trappe s'ouvre sous l'action conjuguée dudit système élastique et de la différence de pression, tandis que, si ledit missile vole à très haute altitude, l'ouverture de ladite trappe ne résulte pratiquement que de la seule action dudit système élastique.

De préférence, ladite trappe est basculante et elle est solidaire en rotation d'un arbre monté rotatif sur ladite chambre de combustion.

Il est alors particulièrement avantageux que ledit système élastique comporte une barre de torsion, en prise avec ledit arbre rotatif de la trappe. Celui-ci et ladite barre de torsion peuvent être disposés parallèlement à l'axe de ladite chambre de combustion. Ils peuvent même être coaxiaux.

De préférence, ledit arbre rotatif est excentré par rapport à ladite trappe basculante, et la partie de ladite trappe la plus grande par rapport audit axe excentré pivote vers ladite chambre de combustion, lorsque ladite trappe passe de sa position d'obturation à sa position d'ouverture. Ainsi, les gaz engendrés par ledit propulseur auxiliaire peuvent exercer sur ladite trappe une action tendant à presser celle-ci dans sa position d'obturation.

Dans un mode de réalisation préférentiel, ledit orifice d'introduction d'air est entouré par un col faisant saillie vers l'extérieur de ladite chambre de combustion et ladite trappe basculante et son arbre rotatif sont disposés dans ledit col.

Ledit élément de retenue, qui peut être un lien destructible tel qu'un câble d'acier, peut être disposé du côté de ladite trappe opposé à ladite chambre de combustion et on peut prévoir au moins un canal traversant ladite trappe de part en part, pour soumettre ledit élément de retenue à l'action des gaz engendrés par le propulseur auxiliaire. Ainsi, les gaz à température élevée engendrés par ce dernier et passant à travers ledit canal peuvent rompre ledit lien, de sorte que ladite barre de torsion, en se débandant, fasse tourner ledit arbre rotatif, et que ladite trappe passe de sa position d'obturation à sa position d'ouverture.

Bien entendu, les gaz de combustion engendrés par le propulseur auxiliaire à une température égale, par exemple, à 2.500°C, ne peuvent agir sur le lien qu'en fin de combustion dudit propulseur. En effet, de façon usuelle, les gaz sont engendrés par un bloc de propergol dont la combustion s'effectue radialement du centre vers sa périphérie. Au départ, le canal de la trappe est obturé par une forte épaisseur de propergol et ne peut ainsi voir passer aucun écoulement gazeux. Ce n'est qu'en fin de combustion du bloc, lorsqu'il ne reste qu'une très mince couche de propergol mais une pression encore suffisante dans la chambre de combustion, que les gaz très chauds peuvent circuler dans le canal et fondre le lien.

La présente invention concerne de plus un statoréacteur comportant une chambre de combustion, pourvue d'au moins un orifice pour introduire de l'air de combustion à l'intérieur de ladite chambre de combustion, et un système d'obturation pour ledit orifice, ledit système présentant les particularités décrites ci-dessus. Elle concerne également un missile équipé d'un tel statoréacteur.

Les figures du dessin annexé feront bien comprendre comment l'invention peut être réalisée. Sur ces figures, des références identiques désignent des éléments semblables.

La figure 1 montre schématiquement, en coupe longitudinale partielle, un missile équipé d'un statoréacteur de type connu, dont les orifices d'introduction d'air sont pourvus d'obturateurs mobiles.

La figure 2 illustre, suivant une coupe correspondant à la ligne II-II de la figure 1, un système pour l'obturation d'un orifice d'introduction d'air conforme à la présente invention.

La figure 3 est une coupe suivant la ligne III-III de la figure 2.

Les figures 4, 5 et 6 illustrent, en vues semblables à la figure 3, différentes positions de la trappe du système d'obturation conforme à la présente invention.

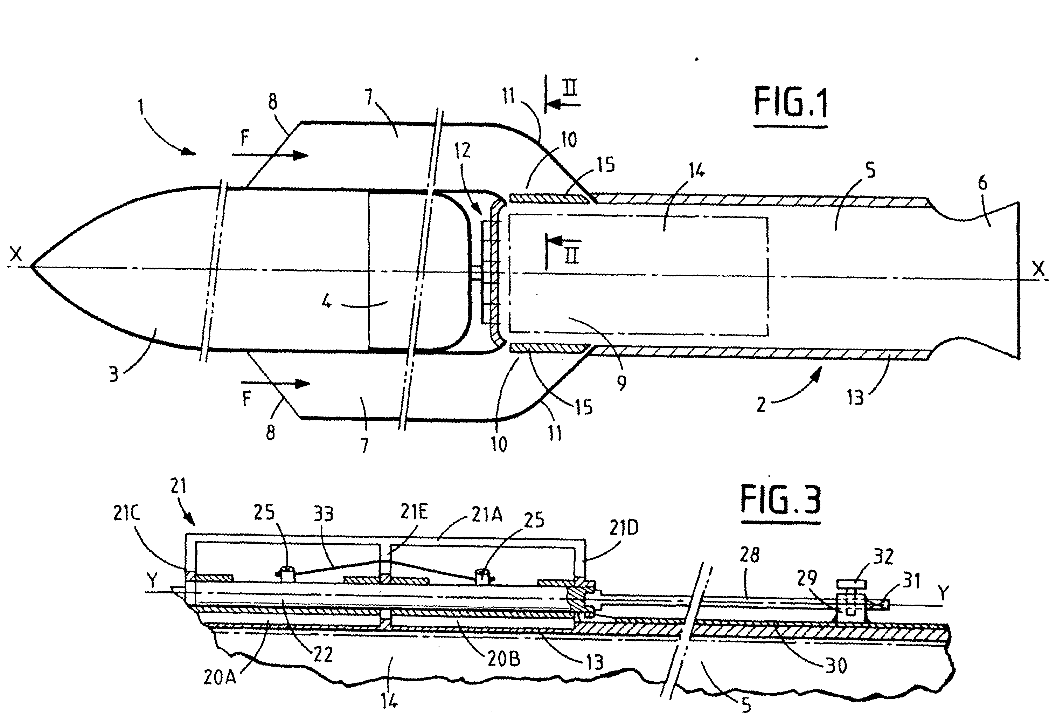

Sur la figure 1, on a représenté schématiquement, à des fins explicatives, un missile 1, d'axe longitudinal X-X, propulsé par un statoréacteur 2 de type connu.

Le missile 1 comporte un corps 3 contenant, entre autres, les appareils et charges usuels (qui ne sont pas représentés car n'étant pas impliqués par l'invention) et un réservoir de combustible 4, destiné à l'alimentation du statoréacteur 2 et fixé à la partie arrière dudit corps 3.

Le statoréacteur 2 comporte une chambre de combustion 5, se terminant à l'arrière par une tuyère d'éjection 6 et reliée, vers l'avant, à une pluralité de manches à air 7.

Les manches à air 7 sont disposées à la périphérie du corps 3 et elles sont solidaires de celui-ci. Chacune d'elles, vers l'avant, comporte une entrée d'air correspondante 8 et, vers l'arrière, débouche dans la partie avant 9 de la chambre de combustion 5 par un orifice correspondant 10.

Un coude 11 est prévu dans chaque manche à air 7 pour raccorder la partie de celle-ci fixée à la paroi extérieure du corps 3 à l'orifice 10 correspondant de la chambre de combustion 5.

Au voisinage de la partie avant 9 de la chambre de combustion 5 est prévu un dispositif 12 d'injection de combustible. Le dispositif 12 est commandé par un dispositif d'alimentation et de régulation de combustible (non représenté) porté par le corps 3 et relié au réservoir 4.

Un revêtement de protection thermique 13 est prévu sur les parois intérieures de la chambre de combustion 5.

Le fonctionnement du missile 1 est le suivant.

Initialement, après largage du missile 1 de son porteur, le statoréacteur 2 n'étant pas en service, le missile 1 est mû par un propulseur auxiliaire consommable 14 (par exemple une charge de poudre) logé à l'intérieur de la chambre de combustion 5.

Quand le propulseur auxiliaire 14 est en fonctionnement, les manches à air 7 sont obturées, par des obturateurs mobiles 15 obturant les orifices 10, à l'entrée dans la chambre de combustion 5 (position représentée sur la figure 1).

A la fin du fonctionnement du propulseur 14, lorsque celui-ci est complètement consumé, lesdits obturateurs 15 sont ouverts et l'air pénétrant (flèches F) dans les manches à air 7 à travers les ouvertures 8 est amené dans la chambre de combustion 5, à travers les orifices 10 dégagés des obturateurs 15 (cette position n'est pas représentée).

De plus, également à la fin du fonctionnement du propulseur consommable 14, le dispositif d'alimentation et de régulation alimente le dispositif d'injection 12 en combustible et ce dernier est enflammé. Le statoréacteur entre alors en fonctionnement et prend le relais du propulseur 14 (qui a disparu) *pour* propulser le missile 1.

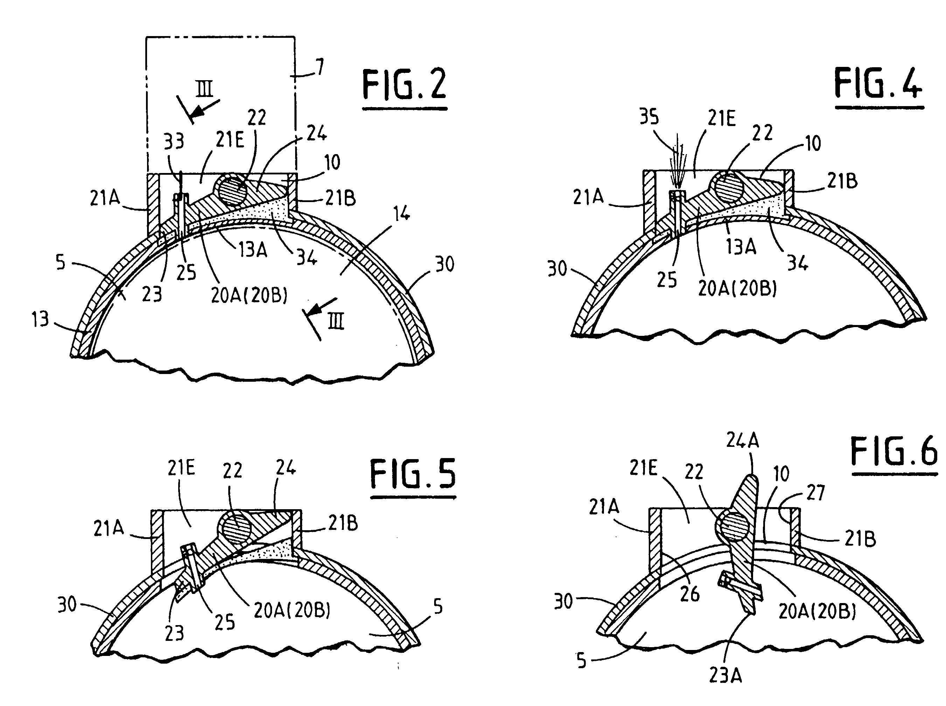

Sur les figures 2 à 6, on a représenté un exemple de système d'obturation des orifices 10, qui est conforme à la présente invention et qui est destiné à remplacer chaque obturateur mobile 15 de la figure 1.

Ce système d'obturation conforme à l'invention comporte une trappe basculante 20, logée dans un col 21, saillant vers l'extérieur de la chambre de combustion 5 et entourant ledit orifice 10, à la base d'une manche à air 7.

Dans l'exemple particulier de réalisation des figures 2 à 6, on a supposé que l'orifice 10 présente une forme rectangulaire allongée parallèlement à l'axe X-X --de sorte que ledit col saillant 21 a une forme parallélépipédique-- et que ladite trappe basculante 20 est double et également rectangulaire et composée de deux parties rectangulaires 20A et 20B.

Le col saillant 21 comporte ainsi deux parois longitudinales 21A et 21B et deux parois transversales 21C et 21D. De plus, à l'intérieur dudit col 21 est prévue une paroi intermédiaire 21E, parallèle aux parois transversales 21C et 21D.

Dans les parois transversales 21C et 21D et dans la paroi intermédiaire 21E, sont prévus des paliers pour un arbre 22, d'axe Y-Y parallèle à l'axe X-X, sur lequel sont calées les deux parties de trappe 20A et 20B. Dans le col 21, la partie de trappe 20A est logée entre les parois 21C et 21E, tandis que la partie de trappe 20B est logée entre les parois 21E et 21D.

L'arbre 22 est excentré par rapport à chacune desdites parties de trappe 20A et 20B de sorte que, par rapport audit arbre, celles-ci comportent chacune une grande aile 23 et une petite aile 24.

Dans la grande aile 23 de chaque partie de trappe 20A ou 20B, est prévu au moins un canal traversant 25, mettant en communication gazeuse les deux côtés de chacune desdites parties de trappe 20A et 20B. Par rotation de l'arbre 22, lesdites parties de trappe 20A et 20B peuvent prendre soit une position d'obturation de l'orifice 10 (voir les figures 2 à 4), soit une position d'ouverture de ce dernier (voir la figure 6). Dans l'exemple de réalisation représenté, et par rapport aux figures 2, 4 à 6, les parties de trappe 20A et 20B tournent dans le sens inverse des aiguilles d'une montre pour passer de la position d'obturation à la position d'ouverture.

En position d'obturation, les bords extrêmes rectilignes 23A et 24A des ailes 23 et 24 d'une partie de trappe 20A, 20B sont respectivement pressés contre une partie 26 de la paroi 21A et contre une partie 27 de la paroi 21B, tandis que les bords latéraux desdites parties de trappe 20A, 20B sont proches des parois latérales 21C, 21E et 21D, 21E, respectivement. Lorsque lesdites parties de trappe 20A et 20B passent de la position d'obturation à la position d'ouverture, leur grande aile 23 se rapproche de la chambre de combustion 5, tandis que leur petite aile 24 s'en éloigne.

A l'une de ses extrémités, l'arbre 22 est en prise de rotation avec une barre de torsion cylindrique 28, coaxiale audit arbre 22 et supportée dans un palier 29, porté par la paroi extérieure 30 de la chambre de combustion 5. L'extrémité 31 de la barre de torsion 28 comporte des pans pour pouvoir être saisie par une pince ou analogue.

Ainsi, les parties de trappe 20A, 20B étant amenées et maintenues en position d'obturation, par exemple manuellement, (voir les figures 2 et 3), on peut agir sur l'extrémité 31 pour conférer à la barre de torsion 28 une contrainte de torsion prédéterminée dans le sens de l'ouverture desdites parties de trappe et bloquer ladite barre dans cet état bandé, par exemple à l'aide d'une vis ou d'une goupille 32, prenant par exemple appui sur le palier 29. Pour contrecarrer l'action dans le sens de l'ouverture de ladite barre de torsion 28, on prévoit un lien 33 qui est disposé du côté desdites parties de trappe 20A, 20B opposé à la chambre de combustion 5, qui est fixé aux canaux 25 en les traversant transversalement et qui passe sur la paroi intermédiaire 21E.

Ainsi, dans leur position d'obturation, les parties de trappe 20A et 20B sont sollicitées par la barre de torsion 28 dans le sens de l'ouverture, mais sont empêchées de pivoter par le lien 33.

De plus, dans cette position d'obturation, représentée sur la figure 2, un bourrage 34, par exemple en silicone, est disposé sous les parties de trappe 20A et 20B. Un tel bourrage 34 permet d'adapter la géométrie desdites parties de trappe 20A et 20B à la géométrie du propulseur auxiliaire 14 et sert de support à la partie 13A de la protection thermique 13, se trouvant à l'aplomb desdites parties de trappe. Dans cette position d'obturation, l'étanchéité aux gaz desdites parties de trappe 20A et 20B --sauf au niveau des canaux traversants 25 qui assurent la communication gazeuse entre la chambre de combustion 5 et les manches à air 7-- est obtenue par ledit bourrage 34 et par ladite protection thermique 13, 13A.

Cette position d'obturation est maintenue jusqu'à la fin de la combustion du propulseur auxiliaire 14. On remarquera que tant que des gaz sous pression sont libérés par le propulseur auxiliaire 14, ceux-ci tendent à maintenir les parties de trappe 20A et 20B en position d'obturation par action sur les grandes ailes 23.

A la fin de cette combustion, le jet des gaz chauds 35, engendrés par le propulseur auxiliaire 14 et traversant les canaux 25, détruit le lien 33. Par suite, la barre de torsion 28 peut se débander et faire tourner l'arbre 22 pour que lesdites parties de trappe 20A, 20B passent de leur position d'obturation (figures 2 et 4) à leur position d'ouverture (figure 6). Le basculement desdites parties de trappe 20A et 20B, éventuellement aidé par la pression de l'air capté par les manches à air 7, provoque la découpe de la partie de protection thermique 13A au droit desdites parties de trappe et l'expulsion du bourrage 34 (figure 5).

La figure 6 montre la trappe 20 en position d'ouverture. De préférence, la géométrie de cette trappe est conçue pour participer au mieux à l'efficacité de combustion dans la chambre 5, en donnant à l'écoulement d'air traversant l'orifice 10 un effet de rotation propice à un bon mélange air/carburant.

## Revendications

1. Système d'obturation pour un orifice (10) d'introduction d'air de combustion dans la chambre de combustion (5) d'un statoréacteur (2), ledit statoréacteur étant susceptible, dans une phase initiale de fonctionnement correspondant à la mise en vitesse dudit statoréacteur, de fonctionner en fusée grâce à un propulseur auxiliaire consommable (14) disposé dans ladite chambre de combustion (5), puis, lorsque ledit statoréacteur atteint une vitesse prédéterminée, de fonctionner en statoréacteur proprement dit avec injection de combustible et d'air de combustion dans ladite chambre de combustion (5), et ledit système d'obturation comportant au moins une trappe (20A, 20B) montée mobile par rapport à ladite chambre de combustion pour pouvoir prendre soit une position d'obturation pour laquelle ladite trappe obture ledit orifice (10) pendant ladite phase initiale de fonctionnement en fusée, soit une position d'ouverture pour laquelle ladite trappe ouvre ledit orifice (10) pour le fonctionnement en statoréacteur,
**caractérisé en ce qu'**il comporte
- un système élastique (28, 29, 31, 32), reliant ladite chambre de combustion et ladite trappe (20A, 20B) et prenant soit un état bandé, qui correspond à ladite position d'obturation de ladite trappe et dans lequel il tend à ouvrir cette dernière, soit un état débandé pour lequel ladite trappe est dans ladite position d'ouverture ; et
- un élément de retenue (33) pour maintenir ledit système élastique dans ledit état bandé pendant ladite phase initiale de fonctionnement en fusée, ledit élément de retenue étant sensible aux gaz chauds émis par ledit propulseur auxiliaire consommable (14), de sorte que, à la fin de la combustion de celui-ci, ledit élément de retenue (33) libère ledit système élastique qui passe spontanément de son état bandé à son état débandé en entraînant ladite trappe de sa position d'obturation à sa position d'ouverture.

2. Système d'obturation selon la revendication 1, **caractérisé en ce que** ladite trappe (20A, 20B) est basculante et est solidaire en rotation d'un arbre (22) monté rotatif sur ladite chambre de combustion (5).

3. Système d'obturation selon la revendication 2, **caractérisé en ce que** ledit système élastique comporte une barre de torsion (28), en prise avec ledit arbre rotatif (22) de la trappe.

4. Système d'obturation selon l'une des revendications 2 ou 3, **caractérisé en ce que** ledit arbre rotatif (22) est excentré par rapport à ladite trappe basculante (20A, 20B) et **en ce que** les gaz engendrés par ledit propulseur auxiliaire (14) exercent sur ladite trappe une action tendant à presser celle-ci dans sa position d'obturation.

5. Système d'obturation selon l'une des revendications 2 à 4,
**caractérisé en ce que** ladite trappe basculante (20A, 20B) et ledit arbre rotatif (22) sont disposés dans un col (21) entourant ledit orifice d'introduction d'air (10) et faisant saillie vers l'extérieur de ladite chambre de combustion (5).

6. Système d'obturation selon l'une des revendications 3 à 5,
**caractérisé en ce que** ledit arbre rotatif (22) et ladite barre de torsion (28) sont disposés parallèlement à l'axe (X-X) de ladite chambre de combustion (5).

7. Système d'obturation selon l'une quelconque des revendications 1 à 6,
**caractérisé en ce que** ledit élément de retenue (33) est disposé du côté de ladite trappe (20A, 20B) opposé à ladite chambre de combustion (5) et **en ce qu'**au moins un canal (25) traverse ladite trappe de part en part, pour soumettre ledit élément de retenue (33) à l'action des gaz engendrés par ledit propulseur auxiliaire (14).

8. Système d'obturation selon l'une quelconque des revendications 1 à 7,
**caractérisé en ce que** ledit élément de retenue est un lien (33) destructible sous l'action des gaz engendrés par ledit propulseur auxiliaire (14).

9. Statoréacteur (2) comportant une chambre de combustion (5), pourvue d'au moins un orifice (10) pour introduire de l'air de combustion à l'intérieur de ladite chambre de combustion, et un système d'obturation pour ledit orifice d'introduction d'air de combustion, ledit statoréacteur étant susceptible, dans une phase initiale de fonctionnement correspondant à la mise en vitesse dudit statoréacteur, de fonctionner en fusée grâce à un propulseur auxiliaire consommable (14) disposé dans ladite chambre de combustion (5), puis, lorsque ledit statoréacteur atteint une vitesse prédéterminée, de fonctionner en statoréacteur proprement dit avec injection de combustible et d'air de combustion dans ladite chambre de combustion, et ledit système d'obturation comportant au moins une trappe (20A, 20B), montée mobile par rapport à ladite chambre de combustion (5) pour pouvoir prendre soit une position d'obturation pour laquelle ladite trappe obture ledit orifice (10) pendant ladite phase initiale de fonctionnement en fusée, soit une position d'ouverture pour laquelle ladite trappe ouvre ledit orifice pour le fonctionnement en statoréacteur,
**caractérisé en ce que** ledit système d'obturation comporte :
- un système élastique (28, 29, 31, 32), reliant ladite chambre de combustion et ladite trappe (20A, 20B) et prenant soit un état bandé, qui correspond à ladite position d'obturation de ladite trappe et dans lequel il tend à ouvrir cette dernière, soit un état débandé pour lequel ladite trappe est dans ladite position d'ouverture ; et
- un élément de retenue (33) pour maintenir ledit système élastique dans ledit état bandé pendant ladite phase initiale de fonctionnement en fusée, ledit élément de retenue étant sensible aux gaz chauds émis par ledit propulseur auxiliaire consommable, de sorte que, à la fin de la combustion de celui-ci, ledit élément de retenue libère ledit système élastique qui passe spontanément de son état bandé à son état débandé en entraînant ladite trappe de sa position d'obturation à sa position d'ouverture.

10. Statoréacteur selon la revendication 9,
**caractérisé en ce que** ledit système d'obturation comporte les particularités de l'une quelconque des revendications 2 à 8.

11. Missile,
**caractérisé en ce qu'**il comporte un statoréacteur selon l'une quelconque des revendications 9 ou 10.

## Claims

1. Shut-off system for an orifice (10) for introducing combustion air into the combustion chamber (5) of a ramjet (2), the said ramjet being capable, in an initial phase of operation corresponding to the said ramjet getting up to speed, of operating as a rocket thanks to a consumable auxiliary motor (14) housed in the said combustion chamber (5), then, when the said ramjet reaches a predetermined speed, of operating as an actual ramjet with fuel and combustion air injected into the said combustion chamber (5), and the said shut-off system comprising at least one flap (20A, 20B) mounted so that it can move relative to the said combustion chamber so that it can adopt either a shut-off position for which the said flap closes off the said orifice (10) during the said initial phase of rocket operation, or an open position for which the said flap opens the said orifice (10) for ramjet operation,
**characterized in that** it comprises:
- an elastic system (28, 29, 31, 32) connecting the said combustion chamber and the said flap (20A, 20B) and adopting either a tense state, which corresponds to the said shut-off position of the said flap and in which it tends to open this flap, or a relaxed state for which the said flap is in the said open position; and
- a retaining element (33) for keeping the said elastic system in the said tense state during the said initial phase of rocket operation, the said retaining element being sensitive to the hot gases emitted by the said consumable auxiliary motor (14) so that on completion of combustion thereof, the said retaining element (33) releases the said elastic system which spontaneously changes from its tense state to its relaxed state, bringing the said flap from its shut-off position to its open position.

2. Shut-off system according to Claim 1,
**characterized in that** the said flap (20A, 20B) can pivot and rotates with a shaft (22) mounted so that it can rotate on the said combustion chamber (5).

3. Shut-off system according to Claim 2,
**characterized in that** the said elastic system comprises a torsion bar (28) in engagement with the said rotary shaft (22) of the flap.

4. Shut-off system according to either of Claims 2 and 3,
**characterized in that** the said rotary shaft (22) is off-centred with respect to the said pivoting flap (20A, 20B) and **in that** the gases generated by the said auxiliary motor (14) exert on the said flap an action which tends to press it into its shut-off position.

5. Shut-off system according to one of Claims 2 to 4,
**characterized in that** the said pivoting flap (20A, 20B) and the said rotary shaft (22) are arranged in a neck (21) surrounding the said air-inlet orifice (10) and projecting towards the outside of the said combustion chamber (5).

6. Shut-off system according to one of Claims 3 to 5,
**characterized in that** the said rotary shaft (22) and the said torsion bar (28) are arranged parallel to the axis (X-X) of the said combustion chamber (5).

7. Shut-off system according to any one of Claims 1 to 6,
**characterized in that** the said retaining element (33) is arranged on the opposite side of the said flap (20A, 20B) to the said combustion chamber (5) and **in that** at least one passage (25) passes right through the said flap in order to subject the said retaining element (33) to the action of the gases generated by the said auxiliary motor (14).

8. Shut-off system according to any one of Claims 1 to 7,
**characterized in that** the said retaining element is a tie (33) that can be destroyed under the action of the gases generated by the said auxiliary motor (14).

9. Ramjet (2) comprising a combustion chamber (5) provided with at least one orifice (10) for introducing combustion air into the said combustion chamber, and a shut-off system for the said combustion-air-inlet orifice, the said ramjet being capable, in an initial phase of operation corresponding to the said ramjet getting up to speed, of operating as a rocket thanks to a consumable auxiliary motor (14) housed in the said combustion chamber (5), then, when the said ramjet reaches a predetermined speed, of operating as an actual ramjet with fuel and combustion air injected into the said combustion chamber, and the said shut-off system comprising at least one flap (20A, 20B) mounted so that it can move relative to the said combustion chamber (5) so that it can adopt either a shut-off position for which the said flap closes off the said orifice (10) during the said initial phase of rocket operation, or an open position for which the said flap opens the said orifice for ramjet operation,
**characterized in that** the said shut-off system comprises:
- an elastic system (28, 29, 31, 32) connecting the said combustion chamber and the said flap (20A, 20B) and adopting either a tense state, which corresponds to the said shut-off position of the said flap and in which it tends to open this flap, or a relaxed state for which the said flap is in the said open position; and
- a retaining element (33) for keeping the said elastic system in the said tense state during the said initial phase of rocket operation, the said retaining element being sensitive to the hot gases emitted by the said consumable auxiliary motor so that on completion of combustion thereof, the said retaining element releases the said elastic system which spontaneously changes from its tense state to its relaxed state, bringing the said flap from its shut-off position to its open position.

10. Ramjet according to Claim 9,
**characterized in that** the said shut-off system has the specific features of any one of Claims 2 to 8.

11. Missile,
**characterized in that** it comprises a ramjet according to either one of Claims 9 and 10.

## Patentansprüche

1. Verschlusssystem für eine Öffnung (10) zum Einlassen von Verbrennungsluft in die Brennkammer (5) eines Staustrahltriebwerks (2), wobei das genannte Staustrahltriebwerk in einer Anfangsfunktionsphase, die dem Hochfahren des genannten Staustrahltriebwerks entspricht, dank einem sich aufbrauchenden Hilfstriebwerk (14), das in der genannten Brennkammer (5) angeordnet ist, als Rakete funktionieren kann, dann, wenn das genannte Staustrahltriebwerk eine vorbestimmte Geschwindigkeit erreicht, als eigentliches Staustrahltriebwerk mit Einspritzung von Brennstoff und Verbrennungsluft in die genannte Brennkammer (5) funktionieren kann, wobei das genannte Verschlusssystem mindestens eine in Bezug auf die genannte Brennkammer beweglich montierte Klappe (20A, 20B) umfasst, damit es entweder eine Verschlussstellung einnehmen kann, damit die genannte Klappe die genannte Öffnung (10) während der genannten Anfangsfunktionsphase als Rakete verschließt, oder eine Öffnungsstellung, in der die genannte Klappe die genannte Öffnung (10) für den Betrieb als Staustrahltriebwerk öffnet, **dadurch gekennzeichnet, dass** es Folgendes umfasst:
- ein elastisches System (28, 29, 31, 32), das die genannte Brennkammer und die genannte Klappe (20A, 20B) verbindet und entweder einen gespannten Zustand annimmt, der der genannten Verschlussstellung der genannten Klappe entspricht und in dem es darauf gerichtet ist, letztere zu öffnen, oder einen entspannten Zustand, in dem sich die genannte Klappe in der genannten Öffnungsstellung befindet; und
- ein Rückhalteelement (33), um das genannte elastische System während der genannten Anfangsfunktionsphase als Rakete im genannten gespannten Zustand zu halten, wobei das genannte Rückhalteelement empfindlich gegenüber den vom genannten sich aufbrauchenden Hilfstriebwerk (14) ausgestoßenen Gasen ist, sodass das genannte Rückhalteelement (33) am Ende der Verbrennung des letzteren das genannte elastische System freigibt, das spontan von seinem gespannten Zustand in seinen entspannten Zustand wechselt und dabei die genannte Klappe aus ihrer Verschlussstellung in ihre Öffnungsstellung bringt.

2. Verschlusssystem gemäß Anspruch 1,
**dadurch gekennzeichnet, dass** die genannte Klappe (20A, 20B) kippbar und rotationsfest mit einer drehbar an der genannten Brennkammer (5) montierten Achse (22) verbunden ist.

3. Verschlusssystem gemäß Anspruch 2,
**dadurch gekennzeichnet, dass** das genannte elastische System eine Drehstabfeder (28) umfasst, die sich in Eingriff mit der genannten drehbare Achse (22) der Klappe befindet.

4. Verschlusssystem gemäß Anspruch 2 oder 3,
**dadurch gekennzeichnet, dass** die genannte drehbare Achse (22) exzentrisch zur genannten Kippklappe (20A, 20B) angeordnet ist, und dass die vom genannten Hilfstriebwerk (14) erzeugten Gase auf die genannte Klappe eine Wirkung ausüben, die darauf gerichtet ist, diese in ihre Verschlussstellung zu drücken.

5. Verschlusssystem gemäß einem der Ansprüche 2 bis 4,
**dadurch gekennzeichnet, dass** die genannte Kippklappe (20A, 20B) und die genannte drehbare Achse (22) in einem Bund (21) angeordnet sind, der die Lufteinleitungsöffnung (10) umgibt und von der genannten Brennkammer (5) gesehen nach außen hin vorspringt.

6. Verschlusssystem gemäß einem der Ansprüche 3 bis 5,
**dadurch gekennzeichnet, dass** die genannte Drehachse (22) und die genannte Drehstabfeder (28) parallel zur Achse X-X der genannten Brennkammer (5) angeordnet sind.

7. Verschlusssystem gemäß einem beliebigen der Ansprüche 1 bis 6,
**dadurch gekennzeichnet, dass** das genannte Rückhalteteil (33) auf der Seite der genannten Klappe (20A, 20B), die der Brennkammer (5) gegenüber liegt, angeordnet ist, und dadurch, dass mindestens ein Kanal (25) vollständig durch die genannte Klappe hindurchführt, um das genannte Rückhalteteil (33) der Wirkung der vom genannten Hilfstriebwerk (14) erzeugten Gase auszusetzen.

8. Verschlusssystem gemäß einem beliebigen der Ansprüche 1 bis 7,
**dadurch gekennzeichnet, dass** das genannte Rückhalteelement ein Verbindungsteil (33) ist, das unter Einwirkung der vom genannten Hilfstriebwerk (14) erzeugten Gase zerstört werden kann.

9. Staustrahltriebwerk (2), das eine Brennkammer (5), die mit mindestens einer Öffnung (10) zum Einleiten von Verbrennungsluft in das Innere der genannten Brennkammer versehen ist, und ein System zum Verschließen der genannten Öffnung zum Einleiten von Verbrennungsluft umfasst, wobei das genannte Staustrahltriebwerk in einer Anfangsfunktionsphase, die dem Hochfahren des genannten Staustrahltriebwerks entspricht, dank einem sich aufbrauchenden Hilfstriebwerk (14), das in der genannten Brennkammer (5) angeordnet ist, als Rakete funktionieren kann, dann, wenn das genannte Staustrahltriebwerk eine vorbestimmte Geschwindigkeit erreicht, als eigentliches Staustrahltriebwerk mit Einspritzung von Brennstoff und Verbrennungsluft in die genannte Brennkammer funktionieren kann, wobei das genannte Verschlusssystem mindestens eine in Bezug auf die genannte Brennkammer (5) beweglich montierte Klappe (20A, 20B) umfasst, damit es entweder eine Verschlussstellung einnehmen kann, in der die genannte Klappe die genannte Öffnung (10) während der genannten Anfangsfunktionsphase als Rakete verschließt, oder eine Öffnungsstellung, in der die genannte Klappe die genannte Öffnung für den Betrieb als Staustrahltriebwerk öffnet, **dadurch gekennzeichnet, dass** das genannte Verschlusssystem Folgendes umfasst:
- ein elastisches System (28, 29, 31, 32), das die genannte Brennkammer und die genannte Klappe (20A, 20B) verbindet und entweder einen gespannten Zustand annimmt, der der genannten Verschlussstellung der genannten Klappe entspricht und in dem es darauf gerichtet ist, letztere zu öffnen, oder einen entspannten Zustand, in dem sich die genannte Klappe in der genannten Öffnungsstellung befindet; und
- ein Rückhalteelement (33), um das genannte elastische System während der genannten Anfangsfunktionsphase als Rakete im genannten gespannten Zustand zu halten, wobei das genannte Rückhalteelement empfindlich gegenüber den vom genannten sich aufbrauchenden Hilfstriebwerk ausgestoßenen Gasen ist, sodass das genannte Rückhalteelement am Ende der Verbrennung des letzteren das genannte elastische System freigibt, das spontan von seinem gespannten Zustand in seinen entspannten Zustand wechselt und dabei die genannte Klappe aus ihrer Verschlussstellung in ihre Öffnungsstellung bringt.

10. Staustrahltriebwerk gemäß Anspruch 9,
**dadurch gekennzeichnet, dass** das genannte Verschlusssystem die Besonderheiten eines der Ansprüche 2 bis 8 umfasst.

11. Flugkörper,
**dadurch gekennzeichnet, dass** er ein Staustrahltriebwerk gemäß Anspruch 9 oder 10 umfasst.
